# EUROPEAN PATENT APPLICATION

(11) **EP 4 321 292 A1**
(43) Date of publication of application: **14.02.2024**
(21) Application number: 22811321.3
(22) Date of filing: 24.05.2022
(51) Int. Cl.: B23K 26/142, B23K 26/12

(54) **VACUUM LASER PROCESSING DEVICE**

(30) Priority: 25.05.2021 JP 2021087908
(71) Applicant: Mitsubishi Heavy Industries, Ltd., Tokyo 100-8332 (JP)
(72) Inventor: OKUDA, Takehisa, Tokyo 100-8332 (JP); TAMARU, Tomoharu, Tokyo 100-8332 (JP); KAWASAKI, Kenji, Tokyo 100-8332 (JP); SUDA, Naoki, Tokyo 100-8332 (JP)
(74) Representative: Cabinet Beau de Loménie
(86) International application number: PCT/JP2022/021257
(87) International publication number: WO 2022/250051

(57) **Abstract**

To prevent metal vapor and spatter from adhering to an optical system. A vacuum laser processing device includes: a laser beam irradiation unit having an optical system configured to emit a laser beam and an irradiation chamber through which the emitted laser beam passes; a construction chamber to which the irradiation chamber of the laser beam irradiation unit is connected, and in which an object to be processed to be constructed by the laser beam is positioned; a vacuum device unit configured to produce a vacuum in the interior of the construction chamber; and a gas supply unit having a gas nozzle configured to inject cross jet gas toward the laser beam at an irradiation port, which is the outlet of the laser beam of the irradiation chamber.

## Description

### Field

The present invention relates to a vacuum laser processing device.

### Background

For example, Patent Literature 1 discloses a laser welding device that aims to stably perform high-quality welding by preventing metal vapor from adhering to a transmission window of a laser beam. This laser welding device performs welding by a laser beam in a low-vacuum atmosphere, and includes: a shielding gas cylinder positioned along the optical axis of the laser beam at a predetermined distance from a weld, with the upper end provided with a transmission window and the lower end opening into an atmosphere control area; and a shielding gas supply unit for introducing shielding gas from the transmission window side of the shielding gas cylinder into the interior of the shielding gas cylinder.

### Citation List

### Patent Literature

Patent Literature 1: Japanese Patent No. 5234471 Summary

### Technical Problem

Metal vapor is relatively light and can be prevented from adhering to the transmission window of the laser beam by the shielding gas described in Patent Literature 1. However, spatter scattered from an object to be welded in welding is heavier than metal vapor, weighing a few grams, and may enter the shielding gas cylinder from the weld and adhere to the transmission window of the laser beam.

The present disclosure is to solve the aforementioned problem and it is an object of the present disclosure to provide a vacuum laser processing device that is capable of preventing a situation in which metal vapor and spatter adhere to an optical system that emits a laser beam.

### Solution to Problem

In order to achieve the object described above, a vacuum laser processing device according to an aspect of the present disclosure includes: a laser beam irradiation unit having an optical system configured to emit a laser beam and an irradiation chamber through which the emitted laser beam passes; a construction chamber to which the irradiation chamber of the laser beam irradiation unit is connected, and in which an object to be processed to be constructed by the laser beam is positioned; a vacuum device unit configured to produce a vacuum in an interior of the construction chamber; and a gas supply unit having a gas nozzle configured to inject cross jet gas toward the laser beam at an outlet of the laser beam of the irradiation chamber.

### Advantageous Effects of Invention

The present disclosure is capable of preventing a situation in which metal vapor and spatter adhere to an optical system that emits a laser beam.

### Brief Description of Drawings

FIG. 1 is a schematic diagram of a vacuum laser processing device according to a first embodiment.
FIG. 2 is a partial sectional schematic diagram of the vacuum laser processing device according to the first embodiment.
FIG. 3 is a schematic diagram of another example of the vacuum laser processing device according to the first embodiment.
FIG. 4 is a schematic diagram of still another example of the vacuum laser processing device according to the first embodiment.
FIG. 5 is a schematic diagram of still another example of the vacuum laser processing device according to the first embodiment.
FIG. 6 is a schematic diagram of still another example of the vacuum laser processing device according to the first embodiment.
FIG. 7 is a schematic diagram of still another example of the vacuum laser processing device according to the first embodiment.
FIG. 8 is a schematic diagram of still another example of the vacuum laser processing device according to the first embodiment.
FIG. 9 is a schematic diagram of still another example of the vacuum laser processing device according to the first embodiment.
FIG. 10 is a schematic diagram of still another example of the vacuum laser processing device according to the first embodiment.
FIG. 11 is a schematic diagram of a vacuum laser processing device according to a second embodiment.
FIG. 12 is a schematic diagram of another example of the vacuum laser processing device according to the second embodiment.
FIG. 13 is a schematic diagram of still another example of the vacuum laser processing device according to the second embodiment.
FIG. 14 is a schematic diagram of still another example of the vacuum laser processing device according to the second embodiment.
FIG. 15 is a schematic diagram of still another example of the vacuum laser processing device according to the second embodiment.
FIG. 16 is a schematic diagram of still another example of the vacuum laser processing device according to the second embodiment.
FIG. 17 is a schematic diagram of a vacuum laser processing device according to a third embodiment. Description of Embodiments

Embodiments of the present disclosure will be described below in detail with reference to the drawings. These embodiments do not limit the present invention. Also, components in the following embodiments include those that are substitutable and easy for a person skilled in the art, or those that are substantially the same. The components in the following embodiments can be combined as appropriate.

### First Embodiment

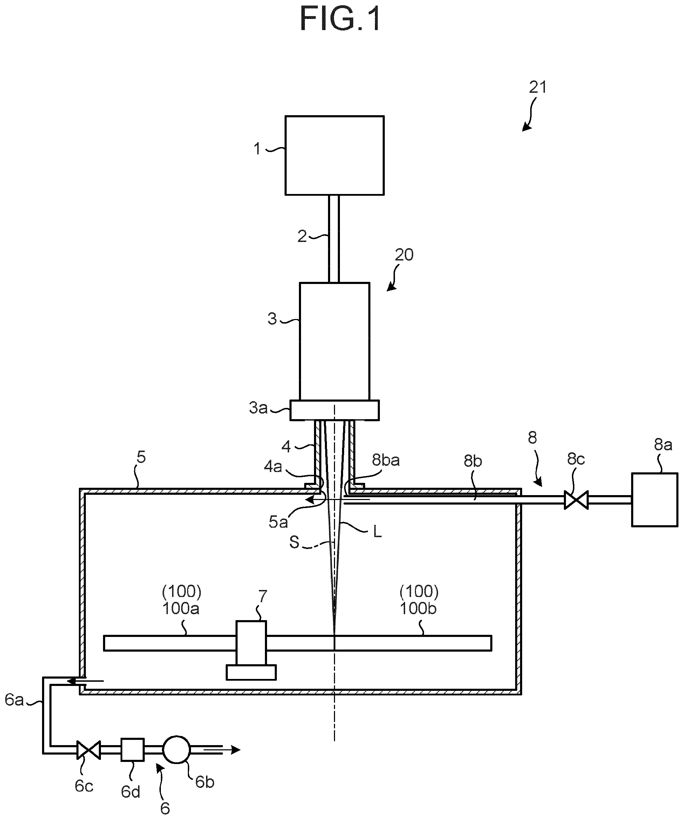

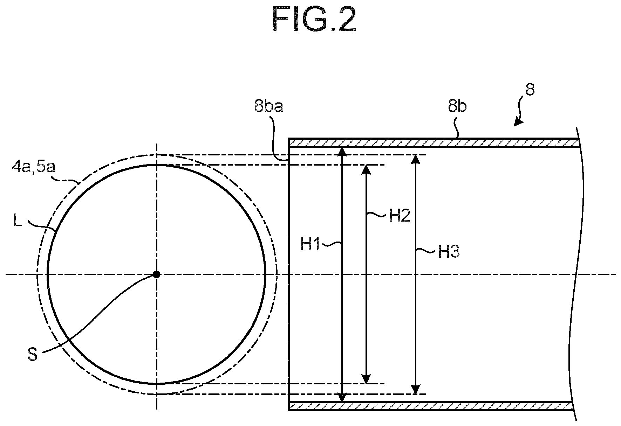

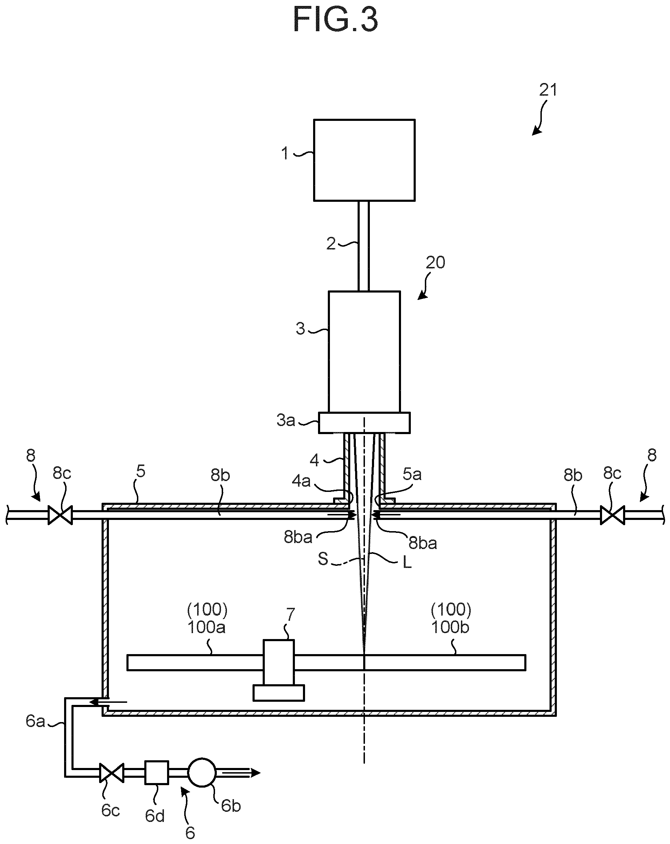

FIG. 1 is a schematic diagram of a vacuum laser processing device according to a first embodiment. FIG. 2 is a partial sectional schematic diagram of the vacuum laser processing device according to the first embodiment. FIGS. 3 to 9 are schematic diagrams of other examples of the vacuum laser processing device according to the first embodiment.

As illustrated in FIG. 1, a vacuum laser processing device 21 of the first embodiment is capable of processing an object to be processed 100 by irradiating the object to be processed 100 with a laser beam L. The vacuum laser processing device 21, for example, irradiates the joint portion of first piping 100a and second piping 100b, which are the object to be processed 100, with the laser beam L, and joins them to each other. The vacuum laser processing device 21 includes a laser beam irradiation unit 20, a construction chamber 5, a vacuum device unit 6, and a gas supply unit 8.

The laser beam irradiation unit 20 includes a laser oscillator 1, an optical fiber cable 2, a laser head 3, and an irradiation chamber 4. The laser oscillator 1 oscillates a laser for irradiating the object to be processed 100. The optical fiber cable 2 propagates the laser oscillated by the laser oscillator 1 to the laser head 3. The laser head 3 irradiates the object to be processed 100 with the laser propagated by the optical fiber cable 2 as the laser beam L centered on an optical axis S. The laser head 3 has a focusing lens or the like (not illustrated) provided in the interior thereof as an optical system, and has a protective window 3a provided in an irradiation section of the laser beam L. The irradiation chamber 4, also referred to as a laser irradiation nozzle, is a cylindrical member fixed to the irradiation section of the laser head 3, through which the laser beam L transmitted through the protective window 3a of the laser head 3 passes. In the irradiation chamber 4, the inner diameter H3 (see FIG. 2) of an irradiation port 4a is to be as small as possible to the extent that the laser beam L does not interfere. The irradiation chamber 4 may be shaped so that its inner diameter is tapered toward the irradiation port 4a of the laser beam L along the outer shape of the laser beam L.

The construction chamber 5, also referred to as a chamber, is a sealed container. The construction chamber 5 has an opening 5a to which the irradiation port 4a of the irradiation chamber 4 of the laser beam irradiation unit 20 is connected. Consequently, the interior of the construction chamber 5 is irradiated by the laser beam L. The construction chamber 5 has the object to be processed 100, which is processed by the irradiated laser beam L, positioned in the interior thereof. The construction chamber 5 has a moving mechanism 7 positioned in the interior thereof. The moving mechanism 7 moves (rotates or slides) the object to be processed 100 on the basis of multiple axes orthogonal to each other in the interior of the construction chamber 5. Consequently, the object to be processed 100 is processed by the laser beam L while being repositioned by the moving mechanism 7. In the construction chamber 5, the inner diameter H3 (see FIG. 2) of the opening 5a is to be as small as possible to the extent that the laser beam L does not interfere.

The vacuum device unit 6 creates a vacuum in the interior space of the sealed container of the construction chamber 5. The vacuum device unit 6 includes a vacuum exhaust pipe 6a, a vacuum pump 6b, a vacuum valve 6c, and a collection section 6d. The vacuum exhaust pipe 6a is piping leading from the interior to the exterior of construction chamber 5. The vacuum pump 6b is provided in the vacuum exhaust pipe 6a, and exhausts the air in the interior of the construction chamber 5 through the vacuum exhaust pipe 6a. The vacuum valve 6c is positioned upstream of the exhaust by the vacuum pump 6b in the vacuum exhaust pipe 6a, and regulates the degree of opening of the vacuum exhaust pipe 6a. The collection section 6d is positioned upstream of the exhaust by the vacuum pump 6b in the vacuum exhaust pipe 6a and downstream of the vacuum exhaust pipe 6a, and collects foreign matter (mainly spatter) that passes through the vacuum exhaust pipe 6a. The collection section 6d is, for example, a filter or cyclone type. A control device not illustrated controls the exhaust of the vacuum pump 6b and the opening of the vacuum valve 6c, whereby the vacuum device unit 6 creates a vacuum of equal to or less than 1/100 atmospheric pressure required for vacuum laser processing in the interior space of the construction chamber 5. The vacuum device unit 6 also removes foreign matter by means of the collection section 6d, preventing foreign matter from causing damage or the like to the vacuum pump 6b.

The gas supply unit 8 supplies cross jet gas. The gas supply unit 8 includes a gas reservoir 8a, a gas supply pipe 8b, and a gas valve 8c. The gas reservoir 8a stores therein compressed air (dry air), nitrogen, or inert gas (argon: Ar, helium: He, carbon dioxide: CO₂). The gas supply pipe 8b is provided from the gas reservoir 8a to the interior space of the construction chamber 5 to supply gas from the gas reservoir 8a to the interior space of the construction chamber 5. The gas supply pipe 8b is provided with a gas nozzle 8ba at an end in the interior of the construction chamber 5. The gas valve 8c is provided in the gas supply pipe 8b, and regulates the degree of opening of the gas supply pipe 8b by means of a control device not illustrated. Consequently, the gas supply unit 8 supplies the gas stored in the gas reservoir 8a as cross jet gas from the gas nozzle 8ba of the gas supply pipe 8b to the interior space of the construction chamber 5. The gas supply unit 8 is controlled to supply the cross jet gas to the interior space of the construction chamber 5 at an atmospheric pressure that does not interfere with the function of the vacuum device unit 6, which creates a vacuum in the interior space of the construction chamber 5. In other words, the vacuum device unit 6 is controlled to create a vacuum in the interior space of the construction chamber 5 even when the gas supply unit 8 supplies the cross jet gas.

The gas supply unit 8 is configured so that the gas nozzle 8ba of the gas supply pipe 8b injects the cross jet gas toward the laser beam L in the immediate vicinity of the opening 5a in the interior of the construction chamber 5. The gas nozzle 8ba is positioned as close to the laser beam L as possible to the extent that the laser beam L does not interfere. Because the opening 5a in the interior of the construction chamber 5 is connected to the irradiation port 4a of the irradiation chamber 4 of the laser beam irradiation unit 20, the gas supply unit 8 is configured so that the gas nozzle 8ba of the gas supply pipe 8b injects the cross jet gas toward the laser beam L at the irradiation port 4a of the irradiation chamber 4. The gas nozzle 8ba is positioned in an orientation that intersects the optical axis S of the laser beam L. Consequently, the gas supply unit 8 injects the cross jet gas in the direction that intersects the optical axis S of the laser beam L. In the vacuum laser processing device 21 in the mode illustrated in FIG. 1, the gas supply unit 8 has the gas nozzle 8ba positioned in an orientation orthogonal to the optical axis S of the laser beam L, and injects the cross jet gas orthogonally to the optical axis S of the laser beam L.

In this manner, the vacuum laser processing device 21 of the first embodiment includes: the laser beam irradiation unit 20 having an optical system configured to emit the laser beam L and the irradiation chamber 4 through which the emitted laser beam L passes; the construction chamber 5 to which the irradiation chamber 4 of the laser beam irradiation unit 20 is connected, and in which the object to be processed 100 to be constructed by the laser beam L is positioned; the vacuum device unit 6 configured to produce a vacuum in the interior of the construction chamber 5; and the gas supply unit 8 having the gas nozzle 8ba configured to inject cross jet gas toward the laser beam L at the irradiation port 4a, which is the outlet of the laser beam L of the irradiation chamber 4.

Consequently, according to the vacuum laser processing device 21 of the first embodiment, metal vapor and spatter generated by the construction are prevented from entering the interior of the irradiation chamber 4 through the irradiation port 4a because the cross jet gas is injected toward the laser beam L at the irradiation port 4a of the irradiation chamber 4. Thus, according to this vacuum laser processing device 21, a situation can be prevented in which the metal vapor and spatter adhere to the optical system that emits the laser beam L. As a result, this vacuum laser processing device 21 is capable of preventing contamination adhesion and damage to the optical system caused by the metal vapor and spatter. This enables this vacuum laser processing device 21 to perform stable vacuum laser welding, improving construction quality and efficiency. The cross jet gas is preferably equal to or more than 10 L/min and equal to or less than 1/10 of the vacuum pump exhaust volume at a pressure of equal to or higher than 0.1 MPa to blow off and remove the metal vapor and spatter and to ensure a degree of vacuum (equal to or lower than 1/100 atm) in the construction chamber 5.

In the vacuum laser processing device 21 of the first embodiment, as illustrated in FIG. 2, the gas nozzle 8ba has a width H1 larger than a diameter H2 of the laser beam L at the injection position to the laser beam L. In the case of this vacuum laser processing device 21, the gas nozzle 8ba includes nozzles that have slit shapes with the width H1, circular shapes with the width H1, elliptical shapes with the width H1, and polygonal shapes with the width H1.

Consequently, according to this vacuum laser processing device 21, by making the width H1 of the gas nozzle 8ba larger than the diameter H2 of the laser beam L, the cross jet gas is injected toward the entire range of the laser beam L. Thus, according to this vacuum laser processing device 21, the metal vapor and spatter generated by the construction can be better prevented from entering the interior of the irradiation chamber 4 from the irradiation port 4a. As a result, this vacuum laser processing device 21 can remarkably obtain the effect of preventing contamination adhesion and damage to the optical system caused by the metal vapor and spatter.

In the vacuum laser processing device 21 of the first embodiment, furthermore, the gas nozzle 8ba preferably has a width H1 larger than the inner diameter H3 of the irradiation port 4a of the irradiation chamber 4 and the opening 5a of the construction chamber 5. Consequently, according to this vacuum laser processing device 21, the metal vapor and spatter generated by the construction can be better prevented from entering the interior of the irradiation chamber 4 from the irradiation port 4a. As a result, this vacuum laser processing device 21 can remarkably obtain the effect of being capable of preventing contamination adhesion and damage to the optical system caused by the metal vapor and spatter.

In the vacuum laser processing device 21 of the first embodiment, as illustrated in FIG. 3, a plurality of the gas nozzles 8ba are positioned with the optical axis S of the laser beam L in between. In FIG. 3, the gas nozzles 8ba are positioned facing each other with the optical axis S of the laser beam L in between. Three or more of the gas nozzles 8ba may be positioned centered on the optical axis S of the laser beam L.

Consequently, according to this vacuum laser processing device 21, the cross jet gas is injected toward the laser beam L from multiple directions with the optical axis S of the laser beam L in between at the irradiation port 4a of the irradiation chamber 4, so that the cross jet gas blocks the irradiation port 4a where the laser beam L is irradiated. Thus, according to this vacuum laser processing device 21, the metal vapor and spatter generated by the construction can be better prevented from entering the interior of the irradiation chamber 4 from the irradiation port 4a. As a result, this vacuum laser processing device 21 can remarkably obtain the effect of being capable of preventing contamination adhesion and damage to the optical system caused by the metal vapor and spatter.

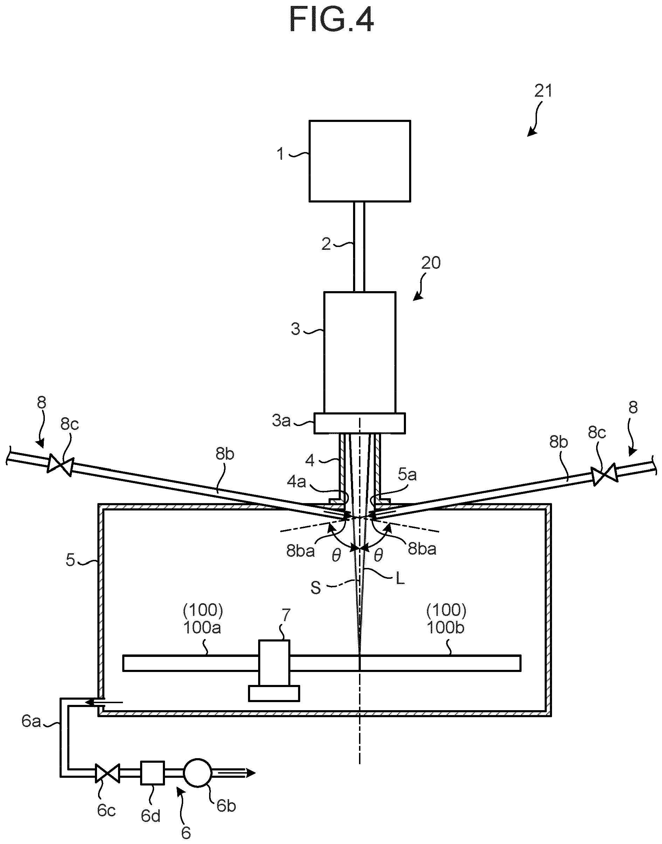

In the vacuum laser processing device 21 of the first embodiment, as illustrated in FIG. 4, the gas nozzles 8ba are positioned being inclined toward the irradiation direction of the laser beam L for the mode in which a plurality of the gas nozzles 8ba are positioned with the optical axis S of the laser beam L in between.

Consequently, according to this vacuum laser processing device 21, the cross jet gas is injected toward the irradiation direction of the laser beam L from multiple directions with the optical axis S of the laser beam L in between, so that the metal vapor and spatter generated by the construction are kept further away from the irradiation port 4a where the laser beam L is irradiated. Thus, according to this vacuum laser processing device 21, metal vapor and spatter can be better prevented from entering the interior of the irradiation chamber 4 from the irradiation port 4a. As a result, this vacuum laser processing device 21 can remarkably obtain the effect of being capable of preventing contamination adhesion and damage to the optical system caused by the metal vapor and spatter.

In the vacuum laser processing device 21 of the first embodiment, as illustrated in FIG. 4, the gas nozzles 8ba are positioned at an angle θ between 10 degrees and 70 degrees, inclusive, with respect to the optical axis S of the laser beam L, facing the irradiation direction of the laser beam L, for the mode in which a plurality of the gas nozzles 8ba are positioned with the optical axis S of the laser beam L in between.

Consequently, according to this vacuum laser processing device 21, the cross jet gas is injected toward the irradiation direction of the laser beam L from multiple directions with the optical axis S of the laser beam L in between, and at the angle Θ between 10 degrees and 70 degrees, inclusive, with respect to the optical axis S of the laser beam L, so that the cross jet gas blocks the irradiation port 4a where the laser beam L is irradiated while the metal vapor and spatter generated by the construction are kept away from the irradiation port 4a where the laser beam L is irradiated. When the angle θ is equal to or more than 10 degrees with respect to the optical axis S of the laser beam L, the effect is remarkably obtained of keeping the metal vapor and spatter away from the irradiation port 4a where the laser beam L is irradiated. On the contrary, when the angle θ is equal to or less than 70 degrees with respect to the optical axis S of the laser beam L, the effect is remarkably obtained of blocking the irradiation port 4a where the laser beam L is irradiated by means of the cross jet gas. Thus, according to this vacuum laser processing device 21, the metal vapor and spatter can be better prevented from entering the interior of the irradiation chamber 4 from the irradiation port 4a. As a result, this vacuum laser processing device 21 can remarkably obtain the effect of being capable of preventing contamination adhesion and damage to the optical system caused by the metal vapor and spatter.

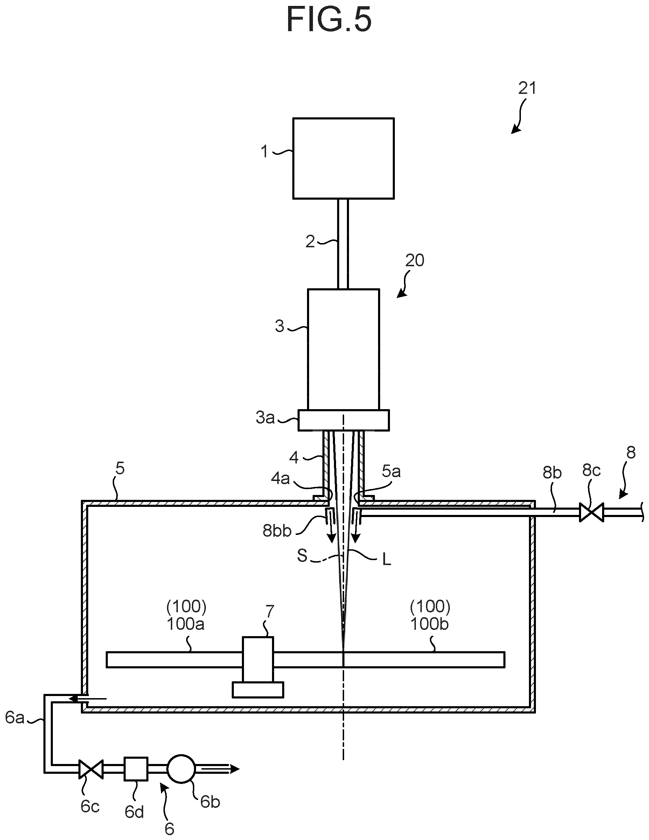

In the vacuum laser processing device 21 of the first embodiment, as illustrated in FIG. 5, a gas nozzle 8bb is positioned around the optical axis S of the laser beam L.

Consequently, according to this vacuum laser processing device 21, the cross jet gas is injected toward the laser beam L from around the optical axis S of the laser beam L at the irradiation port 4a of the irradiation chamber 4, so that the cross jet gas blocks the irradiation port 4a where the laser beam L is irradiated. Thus, according to this vacuum laser processing device 21, the metal vapor and spatter generated by the construction can be better prevented from entering the interior of the irradiation chamber 4 from the irradiation port 4a. As a result, this vacuum laser processing device 21 can remarkably obtain the effect of being capable of preventing contamination adhesion and damage to the optical system caused by the metal vapor and spatter. In this case, the gas nozzle 8bb may be formed to continuously surround the optical axis S of the laser beam L or to intermittently surround the optical axis S of the laser beam L. In the case of this vacuum laser processing device 21, the gas nozzle 8bb is positioned being inclined toward the irradiation direction of the laser beam L, and is preferably positioned at an angle θ (see FIG. 4) of between 10 degrees and 70 degrees, inclusive, with respect to the optical axis S of the laser beam L to obtain a remarkable effect.

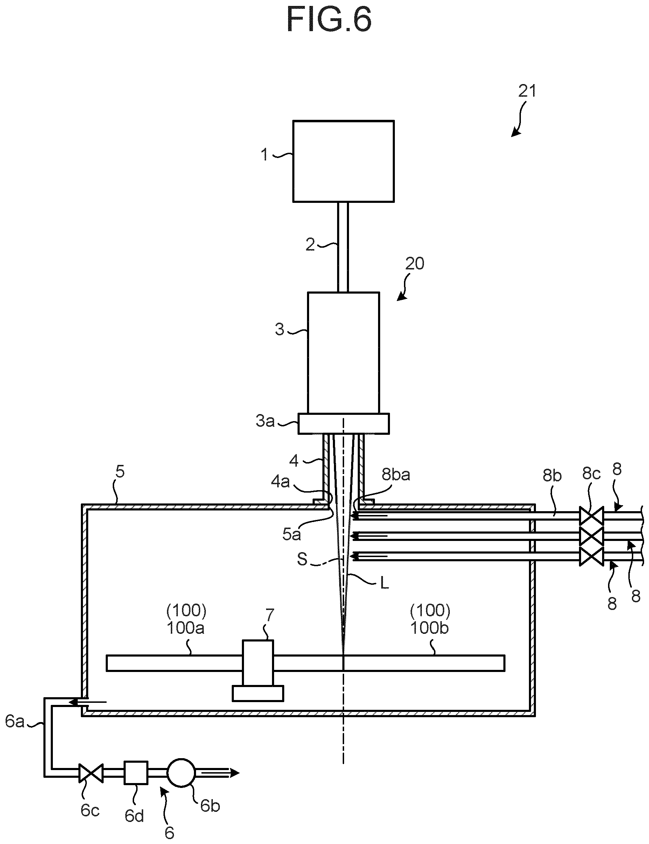

In the vacuum laser processing device 21 of the first embodiment, as illustrated in FIG. 6, a plurality of the gas nozzles 8ba are positioned along the optical axis S of the laser beam L. In FIG. 6, the gas nozzles 8ba are positioned along the optical axis S of the laser beam L in the same direction facing the optical axis S. The gas nozzles 8ba may be positioned along the optical axis S of the laser beam L in multiple directions facing the optical axis S. The gas nozzles 8ba are positioned at equal or unequal intervals along the optical axis S of the laser beam L.

Consequently, according to this vacuum laser processing device 21, the cross jet gas is injected toward the laser beam L from multiple directions along the optical axis S of the laser beam L, so that the metal vapor and spatter generated by the construction are kept further away from the irradiation port 4a where the laser beam L is irradiated. Thus, according to this vacuum laser processing device 21, the metal vapor and spatter can be better prevented from entering the interior of the irradiation chamber 4 from the irradiation port 4a. As a result, this vacuum laser processing device 21 can remarkably obtain the effect of being capable of preventing contamination adhesion and damage to the optical system caused by the metal vapor and spatter.

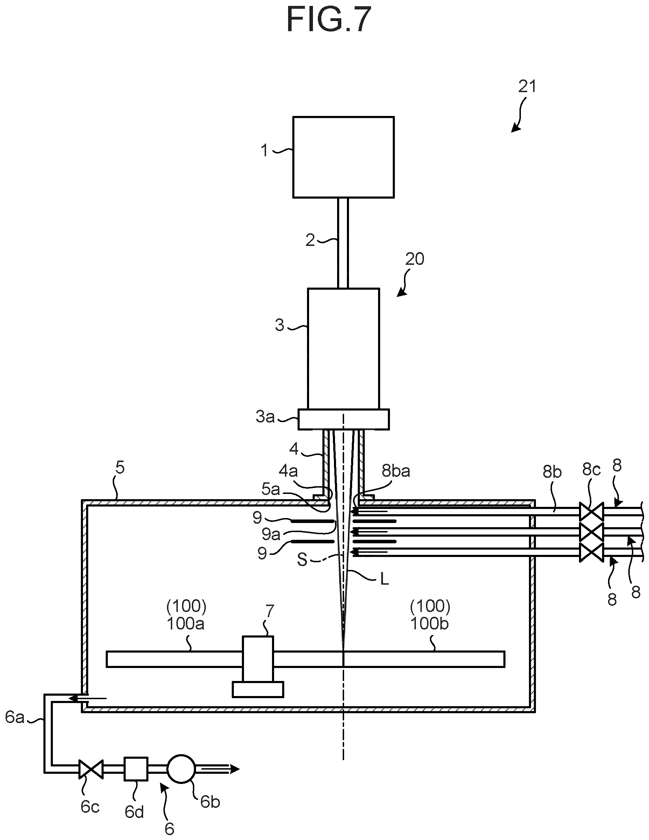

As illustrated in FIG. 7, the vacuum laser processing device 21 of the first embodiment includes partition plates 9 between the gas nozzles 8ba for the mode in which a plurality of the gas nozzles 8ba are positioned along the optical axis S of the laser beam L. The partition plate 9 has a laser beam passage hole 9a through which the laser beam L passes.

Consequently, according to this vacuum laser processing device 21, the partition plate 9 further reduces the scattering of the metal vapor and spatter to the optical system side. As a result, this vacuum laser processing device 21 can remarkably obtain the effect of being capable of preventing contamination adhesion and damage to the optical system caused by the metal vapor and spatter.

In the vacuum laser processing device 21 of the first embodiment, as illustrated in FIGS. 1, 6, 7, and the like, when the gas nozzles 8ba do not face each other with the optical axis S of the laser beam L in between, the gas nozzles 8ba are preferably provided in a mode in which the cross jet gas is injected orthogonally to the optical axis S of the laser beam L.

Consequently, according to this vacuum laser processing device 21, the metal vapor and spatter generated by the construction are blown away in a direction orthogonal to the optical axis S of the laser beam L so as to keep the metal vapor and spatter away from the irradiation port 4a where the laser beam L is irradiated. Thus, according to this vacuum laser processing device 21, the metal vapor and spatter can be better prevented from entering the interior of the irradiation chamber 4 from the irradiation port 4a. As a result, this vacuum laser processing device 21 can remarkably obtain the effect of being capable of preventing contamination adhesion and damage to the optical system caused by the metal vapor and spatter.

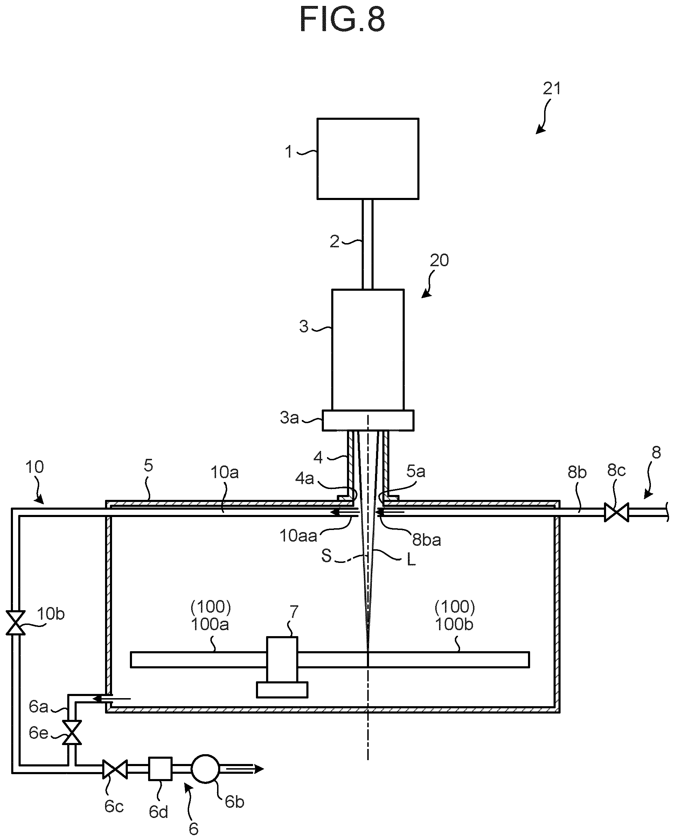

As illustrated in FIG. 8, the vacuum laser processing device 21 of the first embodiment includes a gas discharge unit 10. The gas discharge unit 10 suctions the cross jet gas injected from the gas nozzle 8ba and discharges it to the exterior of the construction chamber 5. The gas discharge unit 10 includes a gas discharge pipe 10a, a gas discharge pump (vacuum pump 6b), a regulating valve 10b, and the collection section 6d. The gas discharge pipe 10a is piping leading from the interior to the exterior of construction chamber 5. The gas discharge pipe 10a is provided with a suction nozzle 10aa in the interior of the construction chamber 5 facing the gas nozzle 8ba across the optical axis S of the laser beam L. The suction nozzle 10aa is positioned as close to the laser beam L as possible to the extent that the laser beam L does not interfere. The suction nozzle 10aa has a width larger than the diameter H2 of the laser beam L, as does the gas nozzle 8ba, at the position facing the gas nozzle 8ba (see FIG. 2). The suction nozzle 10aa includes nozzles that have slit shapes with the aforementioned width, circular shapes with the aforementioned width, elliptical shapes with the aforementioned width, and polygonal shapes with the aforementioned width. In the gas discharge unit 10 of the embodiment, the gas discharge pipe 10a connects the outside end of the construction chamber 5 to the upstream side of the vacuum valve 6c in the vacuum exhaust pipe 6a of the vacuum device unit 6. In this case, a vacuum valve 6e is further provided upstream of the vacuum exhaust pipe 6a to which the gas discharge pipe 10a is connected. In this manner, the gas discharge unit 10 of the embodiment is connected to the vacuum device unit 6 through the regulating valve 10b, and the vacuum pump 6b is applied as the gas discharge pump to exhaust the air in the interior of the construction chamber 5 through a part of the vacuum exhaust pipe 6a. Furthermore, the gas discharge unit 10 of the embodiment has the collection section 6d. The regulating valve 10b is positioned in the gas discharge pipe 10a and regulates the degree of opening of the gas discharge pipe 10a. A control device not illustrated controls the exhaust of the vacuum pump 6b, the opening of the regulating valve 10b, and the opening of the vacuum valves 6c and 6e, whereby the gas discharge unit 10 suctions and discharges the cross jet gas injected from the gas nozzle 8ba to the exterior of the construction chamber 5. Although not explicitly illustrated, the gas discharge unit 10 may be independent of the vacuum device unit 6, with the gas discharge pipe 10a not connected to the vacuum exhaust pipe 6a of the vacuum device unit 6, and a collection section and a gas exhaust pump may be provided downstream of the regulating valve 10b. When the gas discharge unit 10 is independent of the vacuum device unit 6, the control device not illustrated controls the exhaust of gas exhaust pump and the opening of the regulating valve 10b in the gas discharge unit 10 so that the internal space of the construction chamber 5 can be maintained at a vacuum of equal to or lower than 1/100 atm, which is necessary for vacuum laser processing. The degree of vacuum can be easily controlled by providing the regulating valve 10b and the vacuum valve 6e with the gas discharge pipe 10a, which is the gas discharge diameter, and the vacuum exhaust pipe 6a, which is the vacuum exhaust system, arranged in parallel.

Consequently, according to this vacuum laser processing device 21, the metal vapor and spatter that are kept further away from the irradiation port 4a by the cross jet gas are suctioned and discharged to the exterior of the construction chamber 5 by the gas discharge unit 10. Thus, according to this vacuum laser processing device 21, the metal vapor and spatter generated by the construction can be better prevented from entering the interior of the irradiation chamber 4 from the irradiation port 4a. As a result, this vacuum laser processing device 21 can remarkably obtain the effect of being capable of preventing contamination adhesion and damage to the optical system caused by the metal vapor and spatter. According to this vacuum laser processing device 21, the gas discharge unit 10 is connected to the vacuum device unit 6 through the regulating valve 10b, thereby reducing the number of parts and simplifying the configuration.

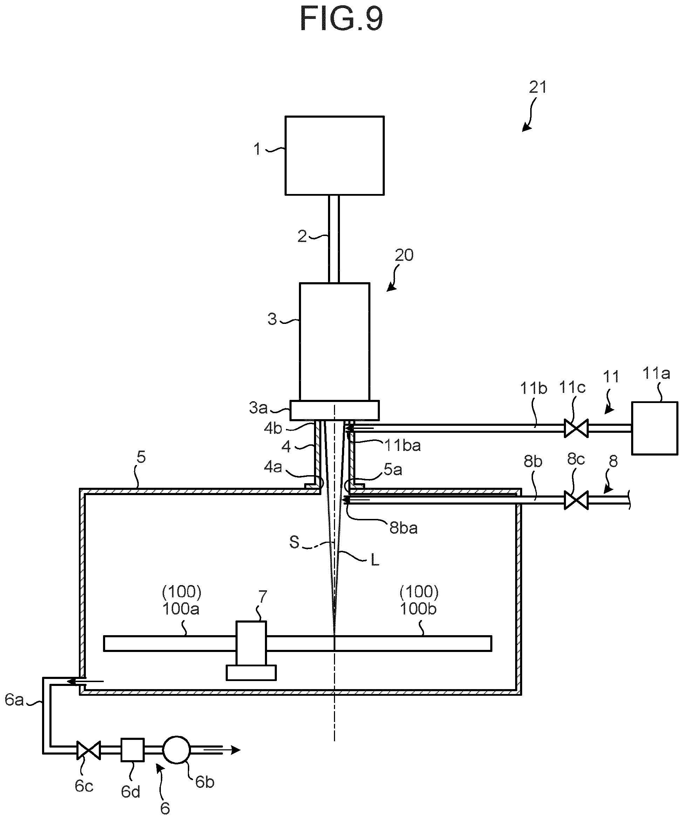

As illustrated in FIG. 9, the vacuum laser processing device 21 of the first embodiment includes an auxiliary gas supply unit 11. The auxiliary gas supply unit 11 injects, into the irradiation chamber 4, auxiliary gas having a pressure higher than that of the cross jet gas of the gas supply unit 8. The auxiliary gas supply unit 11 includes an auxiliary gas reservoir 11a, an auxiliary gas supply pipe 11b, and an auxiliary gas valve 11c. The auxiliary gas reservoir 11a stores therein compressed air (dry air), nitrogen, or inert gas (argon: Ar, helium: He, carbon dioxide: CO₂). The auxiliary gas supply pipe 11b is provided from the auxiliary gas reservoir 11a to the interior space of the irradiation chamber 4 to supply auxiliary gas from the auxiliary gas reservoir 11a to the interior space of the irradiation chamber 4. The auxiliary gas supply pipe 11b is provided with an auxiliary gas nozzle 11ba at an end in the interior of the irradiation chamber 4. The auxiliary gas valve 11c is provided in the auxiliary gas supply pipe 11b, and regulates the degree of opening of the auxiliary gas supply pipe 11b by means of a control device not illustrated. Consequently, the auxiliary gas supply unit 11 supplies the gas stored in the auxiliary gas reservoir 11a as auxiliary gas from the auxiliary gas nozzle 11ba of the auxiliary gas supply pipe 11b to the interior space of the irradiation chamber 4.

The auxiliary gas supply unit 11 is configured so that the auxiliary gas nozzle 11ba of the auxiliary gas supply pipe 11b injects the auxiliary gas toward the laser beam L in the immediate vicinity of the protective window 3a in the interior of the irradiation chamber 4. The auxiliary gas nozzle 11ba is positioned as close to the laser beam L as possible to the extent that the laser beam L does not interfere. The auxiliary gas nozzle 11ba is positioned in an orientation that intersects the optical axis S of the laser beam L. Consequently, the auxiliary gas supply unit 11 injects the auxiliary gas in the direction that intersects the optical axis S of the laser beam L. In the vacuum laser processing device 21 in the mode illustrated in FIG. 9, the auxiliary gas supply unit 11 has the auxiliary gas nozzle 11ba positioned in an orientation orthogonal to the optical axis S of the laser beam L, and injects the auxiliary gas orthogonally to the optical axis S of the laser beam L. The auxiliary gas nozzle 11ba has a width larger than the diameter of the laser beam L at the injection position to the laser beam L, similarly to the gas nozzle 8ba (see FIG. 2). The auxiliary gas nozzle 11ba includes nozzles that have slit shapes with the aforementioned width, circular shapes with the aforementioned width, elliptical shapes with the aforementioned width, and polygonal shapes with the aforementioned width. The auxiliary gas supply unit 11 is controlled to supply the auxiliary gas to the interior space of the irradiation chamber 4 at an atmospheric pressure that does not interfere with the function of the vacuum device unit 6, which creates a vacuum in the interior space of the construction chamber 5. In other words, the vacuum device unit 6 is controlled to produce a vacuum in the interior space of the construction chamber 5 even when the auxiliary gas supply unit 11 supplies the auxiliary gas.

Consequently, according to this vacuum laser processing device 21, a situation is prevented in which the metal vapor and spatter generated by the construction enter the irradiation chamber 4 by making the atmospheric pressure higher in the irradiation chamber 4 than in the construction chamber 5 because the auxiliary gas having a pressure higher than that of the cross jet gas of the gas supply unit 8 is injected into the irradiation chamber 4. Thus, according to this vacuum laser processing device 21, the metal vapor and spatter can be better prevented from entering the interior of the irradiation chamber 4 from the irradiation port 4a. As a result, this vacuum laser processing device 21 can remarkably obtain the effect of being capable of preventing contamination adhesion and damage to the optical system caused by the metal vapor and spatter.

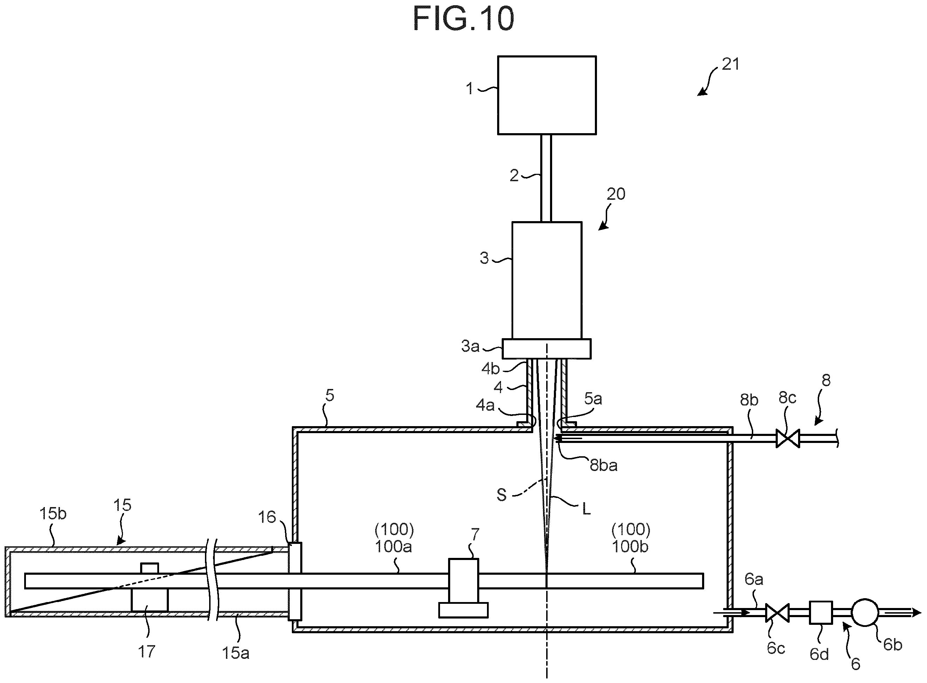

As illustrated in FIG. 10, the vacuum laser processing device 21 of the first embodiment includes an auxiliary construction chamber 15. The auxiliary construction chamber 15 is formed in a tubular shape (cylindrical shape in the embodiment) with one end open and the other end closed. The auxiliary construction chamber 15 is provided to be detachable from a flange 16 one open end of which is formed in the construction chamber 5, and the interior of the auxiliary construction chamber 15 communicates with the interior of the construction chamber 5 while being attached to the flange 16. The auxiliary construction chamber 15 has a main part 15a and a door 15b. The main part 15a constitutes one end that is open of the auxiliary construction chamber 15, and is provided to be detachable from the flange 16 as described above. The door 15b constitutes the other end that is closed of the auxiliary construction chamber 15, and is mutually with the main part 15a in the form of a diagonal cut from the cylindrical shape formed by the auxiliary construction chamber 15. The door 15b is provided with rotational movement to the main part 15a along the cylindrical circular shape formed by the auxiliary construction chamber 15, and opens and closes the main part 15a by the rotational movement. The auxiliary construction chamber 15 is airtight when the main part 15a is closed by the door 15b, and the degree of vacuum is secured together with the construction chamber 5, which is communicated with the auxiliary construction chamber 15. The auxiliary construction chamber 15 can insert the object to be processed 100 into the construction chamber 5 in the communicated state, or remove the object to be processed 100 present in the construction chamber 5 when the main part 15a is opened by the door 15b. The auxiliary construction chamber 15 has a support mechanism 17 in the interior thereof and in the main part 15a. The support mechanism 17 supports a part of the object to be processed 100 that is positioned in the construction chamber 5 and that extends toward the main part 15a. The support mechanism 17 guides the movement of the object to be processed 100 by the moving mechanism 7 positioned in the interior of the construction chamber 5. In the vacuum laser processing device 21 illustrated in FIG. 10, the vacuum device unit 6 differs from that in FIGS. 1 to 9 that has previously been described in its installation position. However, this is for convenience to illustrate the auxiliary construction chamber 15, and the configuration of the vacuum device unit 6 is substantially the same as that has previously been described.

In this manner, the vacuum laser processing device 21 of the first embodiment includes the auxiliary construction chamber 15 that is provided to be detachable from the construction chamber 5 and that is communicated with the construction chamber 5 and in which a part of the object to be processed 100 is positioned. Consequently, according to this vacuum laser processing device 21, for example, if the object to be processed 100 is long piping that does not fit into the construction chamber 5, a part of the object to be processed 100 that does not fit into the construction chamber 5 can be housed in the auxiliary construction chamber 15. As a result, this vacuum laser processing device 21 can position the entire object to be processed 100 in an atmosphere with the same degree of vacuum as the construction chamber 5, and can perform processing in the atmosphere with the degree of vacuum. In the vacuum laser processing device 21 of the first embodiment, the auxiliary construction chamber 15 has the door 15b configured to open and close to allow the object to be processed 100 to be put in and taken out. Consequently, according to this vacuum laser processing device 21, putting in and taking out of the object to be processed 100 can be carried out through the auxiliary construction chamber 15. In the vacuum laser processing device 21 of the first embodiment, the auxiliary construction chamber 15 has the support mechanism 17 configured to support the object to be processed 100. Consequently, according to this vacuum laser processing device 21, the support mechanism 17 supports the object to be processed 100 extending from the construction chamber 5 to the auxiliary construction chamber 15, and the processing of the object to be processed 100 can be carried out stably.

### Second Embodiment

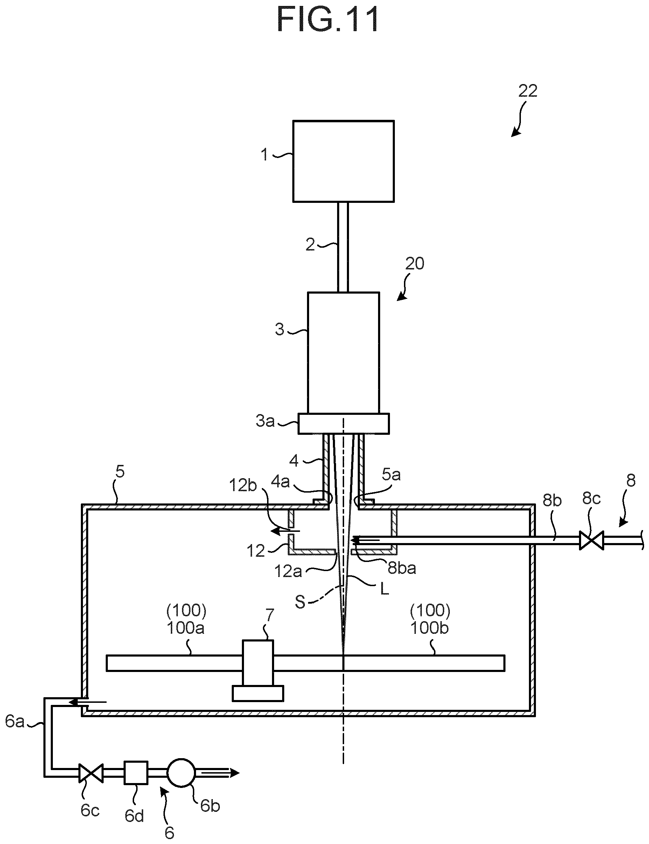

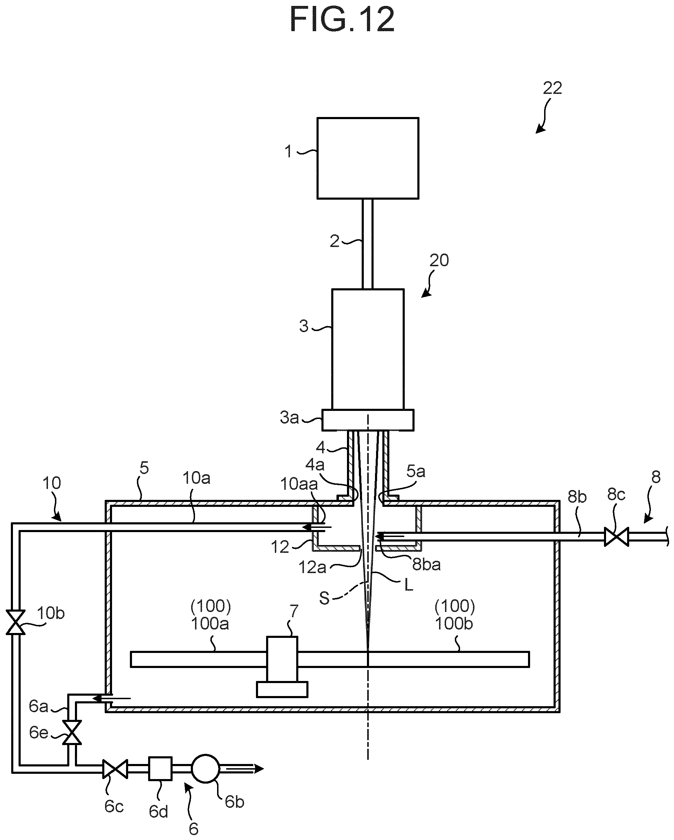

FIG. 11 is a schematic diagram of a vacuum laser processing device according to a second embodiment. FIGS. 12 to 15 are schematic diagrams of other examples of the vacuum laser processing device according to the second embodiment.

The vacuum laser processing device 22 of the second embodiment differs from the vacuum laser processing device 21 of the first embodiment in that it includes a removal chamber 12. Consequently, in the vacuum laser processing device 22 of the second embodiment, the same reference signs are given to the parts equivalent to those of the vacuum laser processing device 21 of the first embodiment, and descriptions thereof are omitted.

As illustrated in FIG. 11, the removal chamber 12 is positioned in the interior of the construction chamber 5. The removal chamber 12 is box-shaped to surround the irradiation port 4a, which is the outlet of the laser beam L of the irradiation chamber 4. The removal chamber 12 has a laser beam passage hole 12a through which the laser beam L passes to the construction chamber 5. Consequently, the removal chamber 12 is interposed between the irradiation chamber 4 and the construction chamber 5. In the removal chamber 12, the inner diameter of the laser beam passage hole 12a is to be as small as possible to the extent that the laser beam L does not interfere. The removal chamber 12 is provided with a gas discharge hole 12b going therethrough at a location not involved with the laser beam L. The box shape of the removal chamber 12 has a cylindrical or square tubular section surrounding the irradiation port 4a provided with the gas discharge hole 12b therethrough, and a lid through which the laser beam passage hole 12a goes is formed at the end of the tubular section.

The removal chamber 12 has the gas supply pipe 8b of the gas supply unit 8 provided going through in the interior thereof, and the gas nozzle 8ba is positioned. The gas nozzle 8ba injects cross jet gas toward the laser beam L, similarly to the vacuum laser processing device 21 of the first embodiment. The gas nozzle 8ba is positioned as close to the laser beam L as possible to the extent that the laser beam L does not interfere. The gas nozzle 8ba is positioned in an orientation that intersects the optical axis S of the laser beam L, and injects the cross jet gas in a direction that intersects the optical axis S of the laser beam L. In the vacuum laser processing device 22 in the mode illustrated in FIG. 11, the gas nozzle 8ba is positioned in an orientation orthogonal to the optical axis S of the laser beam L, and injects the cross jet gas orthogonally to the optical axis S of the laser beam L. The cross jet gas injected toward the laser beam L in the interior of the removal chamber 12 is then discharged from the gas discharge hole 12b to the construction chamber 5, which is the exterior of the removal chamber 12.

In this manner, the vacuum laser processing device 22 of the second embodiment includes: the laser beam irradiation unit 20 having an optical system configured to emit the laser beam L and the irradiation chamber 4 through which the emitted laser beam L passes; the construction chamber 5 to which the irradiation chamber 4 of the laser beam irradiation unit 20 is connected, and in which the object to be processed 100 to be constructed by the laser beam L is positioned; the vacuum device unit 6 configured to produce a vacuum in the interior of the construction chamber 5; the removal chamber 12 provided in the interior of the construction chamber 5 so as to surround the irradiation port 4a, which is the outlet of the laser beam L of the irradiation chamber 4, the removal chamber 12 having the laser beam passage hole 12a through which the laser beam L passes to the construction chamber 5; and the gas supply unit 8 having the gas nozzle 8ba configured to inject cross jet gas toward the laser beam L at the irradiation port 4a, which is in the interior of the removal chamber 12 and the outlet of the laser beam L of the irradiation chamber 4.

Consequently, according to the vacuum laser processing device 22 of the second embodiment, the metal vapor and spatter generated by the construction are prevented from entering the interior of the irradiation chamber 4 from the irradiation port 4a through the removal chamber 12 because the cross jet gas is injected toward the laser beam L at the irradiation port 4a of the irradiation chamber 4 in the interior of the removal chamber 12. Thus, according to this vacuum laser processing device 22, a situation can be prevented in which the metal vapor and spatter adhere to the optical system that emits the laser beam L. As a result, this vacuum laser processing device 22 is capable of preventing contamination adhesion and damage to the optical system caused by the metal vapor and spatter. This enables this vacuum laser processing device 22 to perform stable vacuum laser welding, improving construction quality and efficiency. Compared with the vacuum laser processing device 21 of the first embodiment, the vacuum laser processing device 22 of the second embodiment can better prevent a situation in which the metal vapor and spatter adhere to the optical system that emits the laser beam L because the cross jet gas is injected toward the laser beam L at the irradiation port 4a of the irradiation chamber 4 in the interior of the removal chamber 12. The cross jet gas is preferably equal to or more than 10 L/min and equal to or less than 1/10 of the vacuum pump exhaust volume at a pressure of equal to or higher than 0.1 MPa to blow off and remove the metal vapor and spatter and to ensure a degree of vacuum (equal to or lower than 1/100 atm) in the construction chamber 5.

In the vacuum laser processing device 22 of the second embodiment, as illustrated in FIG. 11, the gas nozzle 8ba is positioned closer to the laser beam passage hole 12a than the irradiation port 4a. Consequently, according to this vacuum laser processing device 22, a situation is prevented in which the metal vapor and spatter enter the interior of the removal chamber 12 from the laser beam passage hole 12a, and the metal vapor and spatter are better prevented from entering the interior of the irradiation chamber 4 from the irradiation port 4a.

In the vacuum laser processing device 22 of the second embodiment, the gas nozzle 8ba has a width H1 larger than the diameter H2 of the laser beam L at the injection position to the laser beam L with reference to FIG. 2. In the case of this vacuum laser processing device 22, the gas nozzle 8ba includes nozzles that have slit shapes with the width H1, circular shapes with the width H1, elliptical shapes with the width H1, and polygonal shapes with the width H1.

Consequently, according to this vacuum laser processing device 22, by making the width H1 of the gas nozzle 8ba larger than the diameter H2 of the laser beam L, the cross jet gas is injected toward the entire range of the laser beam L. Thus, according to this vacuum laser processing device 22, the metal vapor and spatter generated by the construction can be better prevented from entering the interior of the irradiation chamber 4 from the irradiation port 4a. As a result, this vacuum laser processing device 22 can remarkably obtain the effect of preventing contamination adhesion and damage to the optical system caused by the metal vapor and spatter.

In the vacuum laser processing device 22 of the second embodiment, furthermore, the gas nozzle 8ba preferably has a width larger than the diameters of the irradiation port 4a of the irradiation chamber 4, the opening 5a of the construction chamber 5, and the laser beam passage hole 12a. Consequently, according to this vacuum laser processing device 22, the metal vapor and spatter generated by the construction can be better prevented from entering the interior of the irradiation chamber 4 from the irradiation port 4a. As a result, this vacuum laser processing device 22 can remarkably obtain the effect of being capable of preventing contamination adhesion and damage to the optical system caused by the metal vapor and spatter.

In the vacuum laser processing device 22 of the second embodiment, the relation of P2 × 10 ≤ P1 is satisfied, where P1 is an atmospheric pressure in the interior of the removal chamber 12, and P2 is an atmospheric pressure in the interior of the construction chamber 5.

In the mode illustrated in FIG. 11, the relation between the atmospheric pressure P1 and the atmospheric pressure P2 is satisfied by considering the supply volume of the cross jet by the gas supply unit 8, the exhaust volume of the vacuum pump 6b of the vacuum device unit 6, the degree of vacuum in the construction chamber 5 (equal to or lower than 1/100 atm), and the opening area of the laser beam passage hole 12a of the removal chamber 12 and by setting the opening area of the gas discharge hole 12b of the removal chamber 12 as appropriate.

Consequently, according to this vacuum laser processing device 22, the atmospheric pressure P1 in the interior of the removal chamber 12 is made higher than the atmospheric pressure P2 in the interior of the construction chamber 5, thereby better preventing the metal vapor and spatter generated by the construction from entering the interior of the irradiation chamber 4 from the irradiation port 4a through the removal chamber 12. Thus, according to this vacuum laser processing device 22, a situation can be better prevented in which the metal vapor and spatter adhere to the optical system that emits the laser beam L. As a result, this vacuum laser processing device 22 can remarkably obtain the effect of preventing contamination adhesion and damage to the optical system caused by the metal vapor and spatter.

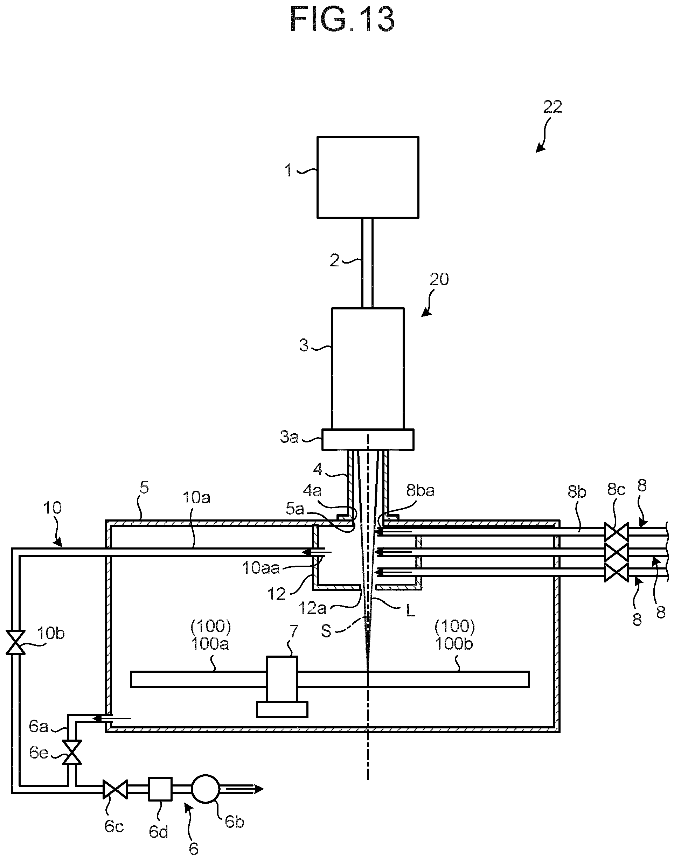

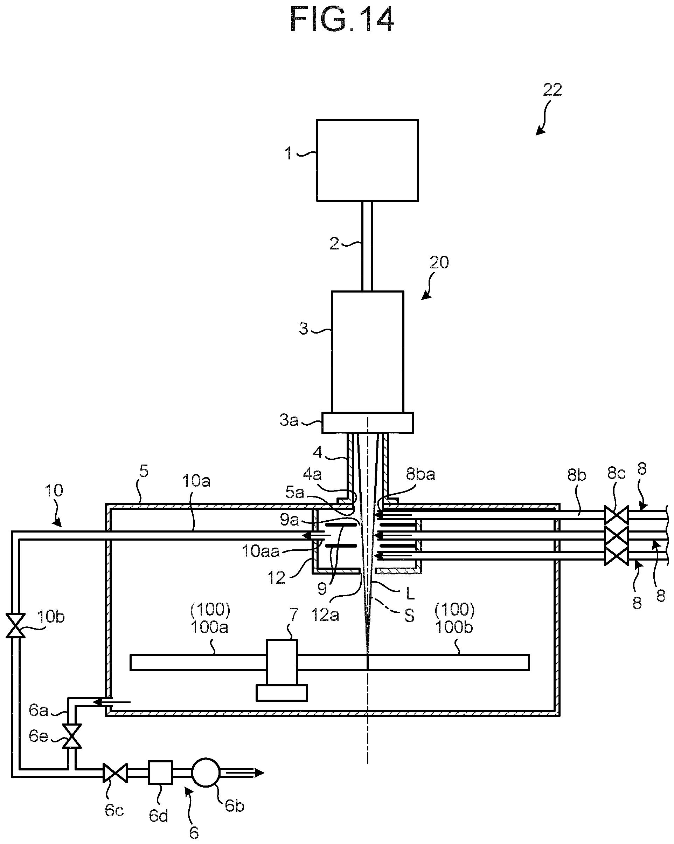

As illustrated in FIG. 12 (and FIGS. 13 and 14), the vacuum laser processing device 22 of the second embodiment includes the gas discharge unit 10. The gas discharge unit 10 suctions, from the interior of the removal chamber 12, the cross jet gas injected from the gas nozzle 8ba and discharges it to the exterior of the construction chamber 5. The gas discharge unit 10 includes the gas discharge pipe 10a, the gas discharge pump (vacuum pump 6b), the regulating valve 10b, and the collection section 6d. The gas discharge pipe 10a is piping leading from the interior of the removal chamber 12 to the exterior of construction chamber 5. The gas discharge pipe 10a is provided with the suction nozzle 10aa in the interior of the construction chamber 5 facing the gas nozzle 8ba across the optical axis S of the laser beam L. The suction nozzle 10aa is positioned as close to the laser beam L as possible to the extent that the laser beam L does not interfere. The suction nozzle 10aa has a width larger than the diameter H2 of the laser beam L, as does the gas nozzle 8ba, at the position facing the gas nozzle 8ba (see FIG. 2). The suction nozzle 10aa includes nozzles that have slit shapes with the aforementioned width, circular shapes with the aforementioned width, elliptical shapes with the aforementioned width, and polygonal shapes with the aforementioned width. In the gas discharge unit 10 of the embodiment, the gas discharge pipe 10a connects the outside end of the construction chamber 5 to the upstream side of the vacuum valve 6c in the vacuum exhaust pipe 6a of the vacuum device unit 6. In this case, a vacuum valve 6e is further provided upstream of the vacuum exhaust pipe 6a to which the gas discharge pipe 10a is connected. In this manner, the gas discharge unit 10 of the embodiment is connected to the vacuum device unit 6 through the regulating valve 10b, and the vacuum pump 6b is applied as the gas discharge pump to exhaust the air in the interior of the construction chamber 5 through a part of the vacuum exhaust pipe 6a. Furthermore, the gas discharge unit 10 of the embodiment has the collection section 6d. The regulating valve 10b is positioned in the gas discharge pipe 10a and regulates the degree of opening of the gas discharge pipe 10a. A control device not illustrated controls the exhaust of the vacuum pump 6b, the opening of the regulating valve 10b, and the opening of the vacuum valves 6c and 6e, whereby the gas discharge unit 10 suctions and discharges the cross jet gas injected from the gas nozzle 8ba to the exterior of the construction chamber 5. Although not explicitly illustrated, the gas discharge unit 10 may be independent of the vacuum device unit 6, with the gas discharge pipe 10a not connected to the vacuum exhaust pipe 6a of the vacuum device unit 6, and a collection section and a gas exhaust pump may be provided downstream of the regulating valve 10b. When the gas discharge unit 10 is independent of the vacuum device unit 6, the control device not illustrated controls the exhaust of gas exhaust pump and the opening of the regulating valve 10b in the gas discharge unit 10 so that the internal space of the construction chamber 5 can be maintained at a vacuum of equal to or lower than 1/100 atm, which is necessary for vacuum laser processing. The degree of vacuum can be easily controlled by providing the regulating valve 10b and the vacuum valve 6e with the gas discharge pipe 10a, which is the gas discharge diameter, and the vacuum exhaust pipe 6a, which is the vacuum exhaust system, arranged in parallel.

In the case of the vacuum laser processing device 22 having the gas discharge unit 10, the relation between the atmospheric pressure P1 and the atmospheric pressure P2 described above is satisfied by considering the supply volume of the cross jet by the gas supply unit 8, the exhaust volume of the vacuum pump 6b of the vacuum device unit 6, the degree of vacuum in the construction chamber 5 (equal to or lower than 1/100 atm), and the opening area of the laser beam passage hole 12a of the removal chamber 12 and by setting the degree of opening by the regulating valve 10b as appropriate.

Consequently, according to this vacuum laser processing device 22, the metal vapor and spatter that are kept further away from the irradiation port 4a by the cross jet gas are suctioned and discharged to the exterior of the construction chamber 5 by the gas discharge unit 10 in the interior of the removal chamber 12. Thus, according to this vacuum laser processing device 22, the metal vapor and spatter generated by the construction can be better prevented from entering the interior of the irradiation chamber 4 from the irradiation port 4a. As a result, this vacuum laser processing device 22 can remarkably obtain the effect of being capable of preventing contamination adhesion and damage to the optical system caused by the metal vapor and spatter. According to this vacuum laser processing device 22, the gas discharge unit 10 is connected to the vacuum device unit 6 through the regulating valve 10b, thereby reducing the number of parts and simplifying the configuration.

In the vacuum laser processing device 22 of the second embodiment, as illustrated in FIG. 13, a plurality of the gas nozzles 8ba are positioned along the optical axis S of the laser beam L in the interior of the removal chamber 12. In FIG. 13, the gas nozzles 8ba are positioned along the optical axis S of the laser beam L in the same direction facing the optical axis S. The gas nozzles 8ba may be positioned along the optical axis S of the laser beam L in multiple directions facing the optical axis S. The gas nozzles 8ba are positioned at equal or unequal intervals along the optical axis S of the laser beam L.

Consequently, according to this vacuum laser processing device 22, the cross jet gas is injected toward the laser beam L from multiple directions along the optical axis S of the laser beam L, so that the metal vapor and spatter generated by the construction are kept further away from the irradiation port 4a where the laser beam L is irradiated. Thus, according to this vacuum laser processing device 22, the metal vapor and spatter can be better prevented from entering the interior of the irradiation chamber 4 from the irradiation port 4a. As a result, this vacuum laser processing device 22 can remarkably obtain the effect of being capable of preventing contamination adhesion and damage to the optical system caused by the metal vapor and spatter.

As illustrated in FIG. 14, the vacuum laser processing device 22 of the second embodiment includes the partition plates 9 between the gas nozzles 8ba for the mode in which a plurality of the gas nozzles 8ba are positioned along the optical axis S of the laser beam L in the interior of the removal chamber 12. The partition plate 9 has the laser beam passage hole 9a through which the laser beam L passes.

Consequently, according to this vacuum laser processing device 22, the partition plate 9 further reduces the scattering of the metal vapor and spatter to the optical system side. As a result, this vacuum laser processing device 22 can remarkably obtain the effect of being capable of preventing contamination adhesion and damage to the optical system caused by the metal vapor and spatter.

In the vacuum laser processing device 22 of the second embodiment, the gas nozzles 8ba are preferably provided in a mode in which the cross jet gas is injected orthogonally to the optical axis S of the laser beam L.

Consequently, according to this vacuum laser processing device 22, the metal vapor and spatter generated by the construction are blown away in a direction orthogonal to the optical axis S of the laser beam L so as to keep the metal vapor and spatter away from the irradiation port 4a where the laser beam L is irradiated. Thus, according to this vacuum laser processing device 22, the metal vapor and spatter can be better prevented from entering the interior of the irradiation chamber 4 from the irradiation port 4a. As a result, this vacuum laser processing device 22 can remarkably obtain the effect of being capable of preventing contamination adhesion and damage to the optical system caused by the metal vapor and spatter.

Although not explicitly illustrated, in the vacuum laser processing device 22 of the second embodiment, a plurality of the gas nozzles 8ba may be positioned with the optical axis S of the laser beam L in between (see FIGS. 3 and 4). For example, the gas nozzles 8ba are positioned facing each other with the optical axis S of the laser beam L in between. Three or more of the gas nozzles 8ba may be positioned centered on the optical axis S of the laser beam L. In the vacuum laser processing device 22 of the second embodiment, the gas nozzle 8ba may be positioned around the optical axis S of the laser beam L (see FIG. 5). In this case, the gas nozzle 8ba may be formed to continuously surround the optical axis S of the laser beam L or to intermittently surround the optical axis S of the laser beam L.

Consequently, according to this vacuum laser processing device 22, the cross jet gas is injected toward the laser beam L from multiple directions with the optical axis S of the laser beam L in between at the irradiation port 4a of the irradiation chamber 4, so that the cross jet gas blocks the irradiation port 4a where the laser beam L is irradiated. Thus, according to this vacuum laser processing device 22, the metal vapor and spatter generated by the construction can be better prevented from entering the interior of the irradiation chamber 4 from the irradiation port 4a. As a result, this vacuum laser processing device 22 can remarkably obtain the effect of being capable of preventing contamination adhesion and damage to the optical system caused by the metal vapor and spatter. In the case of this vacuum laser processing device 22, the gas nozzle 8ba is positioned being inclined toward the irradiation direction of the laser beam L, and is preferably positioned being inclined at an angle θ of between 10 degrees and 70 degrees, inclusive, with respect to the optical axis S of the laser beam L to obtain a remarkable effect.

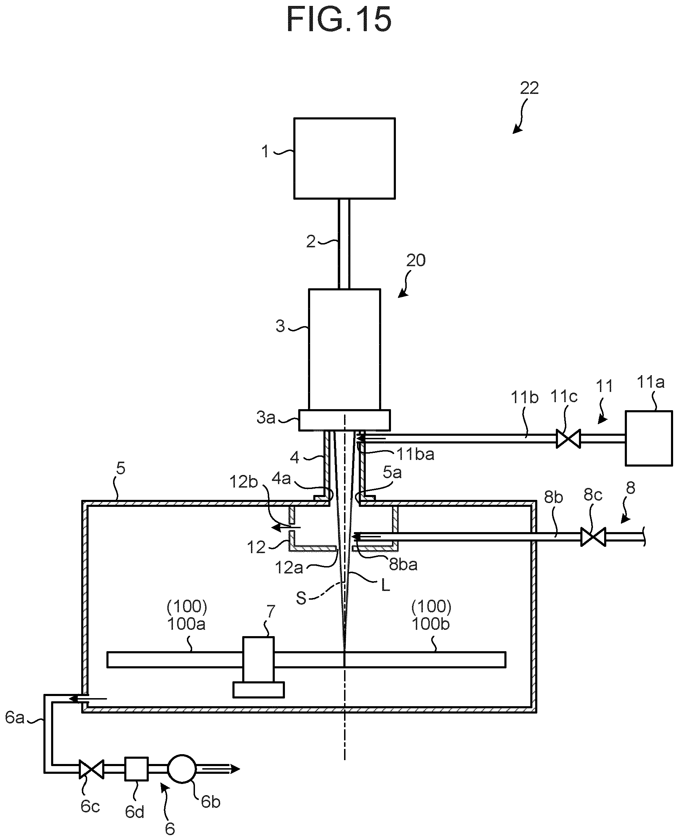

As illustrated in FIG. 15, the vacuum laser processing device 22 of the second embodiment includes the auxiliary gas supply unit 11. The auxiliary gas supply unit 11 injects, into the irradiation chamber 4, auxiliary gas having a pressure higher than that of the cross jet gas of the gas supply unit 8. The auxiliary gas supply unit 11 includes the auxiliary gas reservoir 11a, the auxiliary gas supply pipe 11b, and the auxiliary gas valve 11c. The auxiliary gas reservoir 11a stores therein compressed air (dry air), nitrogen, or inert gas (argon: Ar, helium: He, carbon dioxide: CO₂). The auxiliary gas supply pipe 11b is provided from the auxiliary gas reservoir 11a to the interior space of the irradiation chamber 4 to supply auxiliary gas from the auxiliary gas reservoir 11a to the interior space of the irradiation chamber 4. The auxiliary gas supply pipe 11b is provided with an auxiliary gas nozzle 11ba at an end in the interior of the irradiation chamber 4. The auxiliary gas valve 11c is provided in the auxiliary gas supply pipe 11b, and regulates the degree of opening of the auxiliary gas supply pipe 11b by means of a control device not illustrated. Consequently, the auxiliary gas supply unit 11 supplies the gas stored in the auxiliary gas reservoir 11a as auxiliary gas from the auxiliary gas nozzle 11ba of the auxiliary gas supply pipe 11b to the interior space of the irradiation chamber 4.

The auxiliary gas supply unit 11 is configured so that the auxiliary gas nozzle 11ba of the auxiliary gas supply pipe 11b injects the auxiliary gas toward the laser beam L in the immediate vicinity of the protective window 3a in the interior of the irradiation chamber 4. The auxiliary gas nozzle 11ba is positioned as close to the laser beam L as possible to the extent that the laser beam L does not interfere. The auxiliary gas nozzle 11ba is positioned in an orientation that intersects the optical axis S of the laser beam L. Consequently, the auxiliary gas supply unit 11 injects the auxiliary gas in the direction that intersects the optical axis S of the laser beam L. In the vacuum laser processing device 22 in the mode illustrated in FIG. 15, the auxiliary gas supply unit 11 has the auxiliary gas nozzle 11ba positioned in an orientation orthogonal to the optical axis S of the laser beam L, and injects the auxiliary gas orthogonally to the optical axis S of the laser beam L. The auxiliary gas nozzle 11ba has a width larger than the diameter of the laser beam L at the injection position to the laser beam L, similarly to the gas nozzle 8ba (see FIG. 2). The auxiliary gas nozzle 11ba includes nozzles that have slit shapes with the aforementioned width, circular shapes with the aforementioned width, elliptical shapes with the aforementioned width, and polygonal shapes with the aforementioned width. The auxiliary gas supply unit 11 is controlled to supply the auxiliary gas to the interior space of the irradiation chamber 4 at an atmospheric pressure that does not interfere with the function of the vacuum device unit 6, which creates a vacuum in the interior space of the construction chamber 5. In other words, the vacuum device unit 6 is controlled to produce a vacuum in the interior space of the construction chamber 5 even when the auxiliary gas supply unit 11 supplies the auxiliary gas.

Consequently, according to this vacuum laser processing device 22, a situation is prevented in which the metal vapor and spatter generated by the construction enter the irradiation chamber 4 by making the atmospheric pressure higher in the irradiation chamber 4 than in the removal chamber 12 because the auxiliary gas having a pressure higher than that of the cross jet gas of the gas supply unit 8 is injected into the irradiation chamber 4. Thus, according to this vacuum laser processing device 22, the metal vapor and spatter can be better prevented from entering the interior of the irradiation chamber 4 from the irradiation port 4a. As a result, this vacuum laser processing device 22 can remarkably obtain the effect of being capable of preventing contamination adhesion and damage to the optical system caused by the metal vapor and spatter.

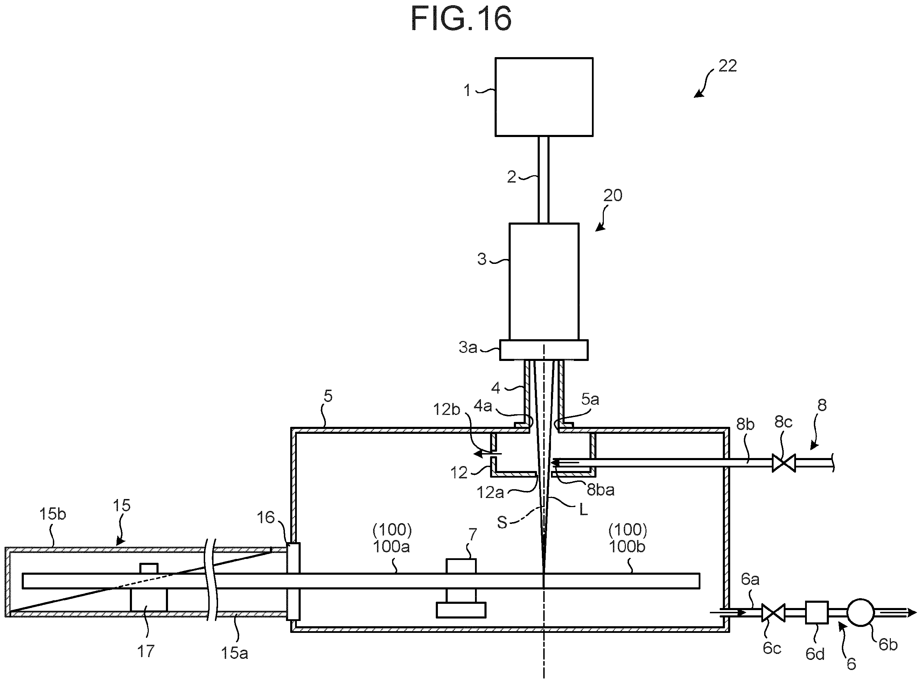

As illustrated in FIG. 16, the vacuum laser processing device 22 of the second embodiment includes the auxiliary construction chamber 15, similarly to the vacuum laser processing device 21 of the first embodiment. Consequently, this vacuum laser processing device 22 can obtain the same effect as the vacuum laser processing device 21.

### Third Embodiment

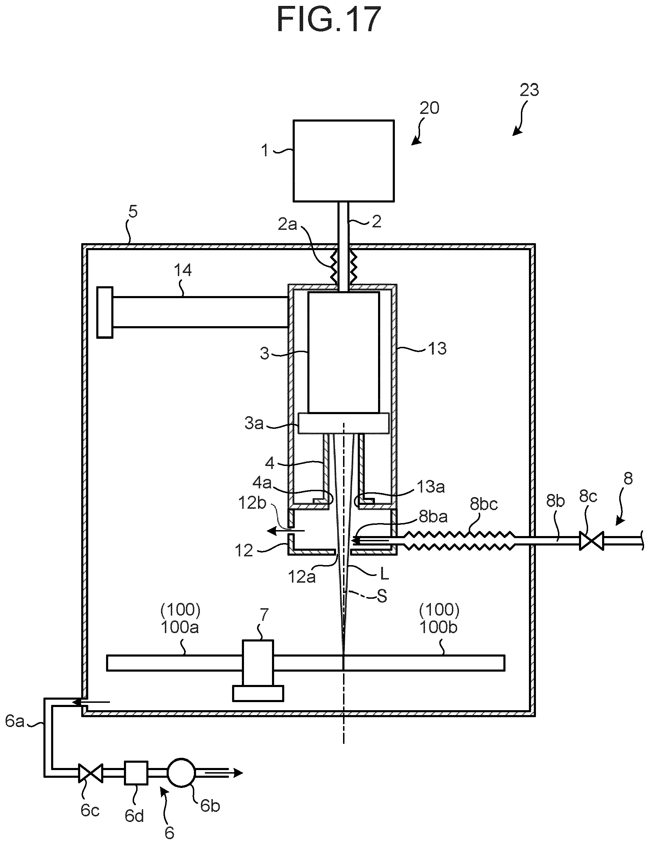

FIG. 17 is a schematic diagram of a vacuum laser processing device according to a third embodiment.

A vacuum laser processing device 23 of the third embodiment differs from the vacuum laser processing devices 21 and 22 of the first and second embodiments in that it includes a housing container 13 and a moving mechanism 14. Consequently, in the vacuum laser processing device 23 of the third embodiment, the same reference signs are given to the parts equivalent to those of the vacuum laser processing devices 21 and 22 of the first and second embodiments, and descriptions thereof are omitted.

The housing container 13 houses therein the laser beam irradiation unit 20. The vacuum laser processing device 23 illustrated in FIG. 17 houses a part of the optical fiber cable 2, the laser head 3, and the irradiation chamber 4 in the interior of the laser beam irradiation unit 20, but may house the laser oscillator 1 and the optical fiber cable 2. The housing container 13 is positioned in the interior of the construction chamber 5. In FIG. 17, the housing container 13 has a part of the optical fiber cable 2, the laser head 3, and the irradiation chamber 4 fixed in the interior thereof. The housing container 13 has an opening 13a formed at the portion where the irradiation chamber 4 is fixed, and the portion of the opening 13a corresponding to the irradiation port 4a of the irradiation chamber 4 is opened. Consequently, in the housing container 13, the laser beam L passes through the opening 13a and is emitted to the exterior thereof. The housing container 13 opens only at the opening 13a. In the housing container 13, the removal chamber 12 is fixed to the portion where the opening 13a is formed. The configuration with the removal chamber 12 is the same as in the vacuum laser processing device 22 of the second embodiment.

The moving mechanism 14 moves the housing container 13 on the basis of multiple axes orthogonal to each other in the interior of the construction chamber 5. Consequently, the housing container 13 is irradiated with the laser beam L while being repositioned by the moving mechanism 14.

The vacuum laser processing device 23 in the mode illustrated in FIG. 17 houses a part of the optical fiber cable 2, the laser head 3, and the irradiation chamber 4 in the interior of the housing container 13. Thus, the other part of the optical fiber cable 2 is positioned in the interior of the construction chamber 5 in the exterior of the housing container 13 and is drawn out to the exterior of the construction chamber 5 and connected to the laser oscillator 1. Here, because the vacuum laser processing device 23 is provided in such a manner that the housing container 13 can be moved in the interior of the construction chamber 5 by the moving mechanism 14, the optical fiber cable 2 also moves with the housing container 13. Thus, in the vacuum laser processing device 23, at least the portion that is positioned in the construction chamber 5 is inserted into a movable sleeve 2a so that the optical fiber cable 2 is not damaged by bending or being stretched. The movable sleeve 2a, for example, is formed in a pleated shape and configured to freely expand, contract, and bend even when the housing container 13 moves. The movable sleeve 2a inserts the optical fiber cable 2 that is positioned in the construction chamber 5, and has one end fixed to the portion of the housing container 13 through which the optical fiber cable 2 is inserted and the other end fixed to the portion of the construction chamber 5 through which the optical fiber cable 2 is inserted. The optical fiber cable 2 is positioned freely against the housing container 13 and the construction chamber 5 while being inserted into the movable sleeve 2a. Consequently, the vacuum laser processing device 23 prevents the optical fiber cable 2 from being loaded even when the housing container 13 moves.

In the vacuum laser processing device 23 in the mode illustrated in FIG. 17, the gas nozzle 8ba configured to inject cross jet gas toward the laser beam L is positioned at the irradiation port 4a, which is the outlet of the laser beam L of the irradiation chamber 4. This gas nozzle 8ba is also fixed with respect to the laser beam L, and moves with the housing container 13. Thus, in the vacuum laser processing device 23, a movable part 8bc constitutes at least the portion positioned in the construction chamber 5 in the gas supply pipe 8b having the gas nozzle 8ba. The movable part 8bc for example, is formed in a pleated shape and configured to freely expand, contract, and bend even when the housing container 13 moves. Consequently, the vacuum laser processing device 23 prevents the gas supply pipe 8b from being overloaded even when the housing container 13 moves.

The vacuum laser processing device 23 illustrated in FIG. 17 is illustrated as having the removal chamber 12 like the vacuum laser processing device 22 of the second embodiment, but may be configured without the removal chamber 12 like the vacuum laser processing device 21 of the first embodiment. Although not explicitly illustrated, the vacuum laser processing device 23 of the third embodiment can obtain the same effect as the vacuum laser processing devices 21 and 22 described above by including the auxiliary construction chamber 15.

In this manner, the vacuum laser processing device 23 of the third embodiment includes: the laser beam irradiation unit 20 having an optical system configured to emit the laser beam L and the irradiation chamber 4 through which the emitted laser beam L passes; the construction chamber 5 to which the irradiation chamber 4 of the laser beam irradiation unit 20 is connected, and in which the object to be processed 100 to be constructed by the laser beam L is positioned; the vacuum device unit 6 configured to produce a vacuum in the interior of the construction chamber 5; the gas supply unit 8 having the gas nozzle 8ba configured to inject cross jet gas toward the laser beam L at the irradiation port 4a, which is the outlet of the laser beam L of the irradiation chamber 4; and the housing container 13 housing therein the laser beam irradiation unit 20 (a part of the optical fiber cable 2, the laser head 3, and the irradiation chamber 4 in FIG. 17), and the housing container 13 is positioned in the interior of the construction chamber 5.

Consequently, according to the vacuum laser processing device 23 of the third embodiment, the optical system can be configured to be movable in the interior of the construction chamber 5 by housing the laser beam irradiation unit 20 in the housing container 13 in the interior of the construction chamber 5. As a result, according to this vacuum laser processing device 23, the optical system and the object to be processed 100 can be moved relative to each other, increasing the degree of freedom in processing.

### Reference Signs List

- 1: Laser oscillator
- 2: Optical fiber cable
- 4: Irradiation chamber
- 4a: Irradiation port
- 5: Construction chamber
- 6: Vacuum device unit
- 6a: Vacuum exhaust pipe
- 6b: Vacuum pump
- 6c: Vacuum valve
- 6d: Collection section
- 8: Gas supply unit
- 8ba, 8bb: Gas nozzles
- 9: Partition plate
- 9a: Laser beam passage hole
- 10: Gas discharge unit
- 11: Auxiliary gas supply unit
- 12: Removal chamber
- 12a: Laser beam passage hole
- 13: Housing container
- 15: Auxiliary construction chamber
- 15a: Door
- 17: Support mechanism
- 20: Laser beam irradiation unit
- 21, 22, 23: Vacuum laser processing devices
- 100: Object to be processed
- L: Laser beam
- S: Optical axis

## Claims

1. A vacuum laser processing device comprising:
a laser beam irradiation unit having an optical system configured to emit a laser beam and an irradiation chamber through which the emitted laser beam passes;
a construction chamber to which the irradiation chamber of the laser beam irradiation unit is connected, and in which an object to be processed to be constructed by the laser beam is positioned;
a vacuum device unit configured to produce a vacuum in an interior of the construction chamber; and
a gas supply unit having a gas nozzle configured to inject cross jet gas toward the laser beam at an outlet of the laser beam of the irradiation chamber.

2. The vacuum laser processing device according to claim 1, wherein the gas nozzle includes a plurality of gas nozzles positioned with an optical axis of the laser beam in between.

3. The vacuum laser processing device according to claim 1 or 2, wherein the gas nozzle is positioned around an optical axis of the laser beam.

4. The vacuum laser processing device according to claim 2 or 3, wherein the gas nozzle is positioned being inclined toward an irradiation direction of the laser beam.

5. The vacuum laser processing device according to claim 4, wherein the gas nozzle is positioned being inclined at an angle of between 10 degrees and 70 degrees, inclusive, with respect to the optical axis of the laser beam.

6. The vacuum laser processing device according to claim 1, wherein the gas nozzle includes a plurality of gas nozzles positioned along an optical axis of the laser beam.

7. The vacuum laser processing device according to claim 6, comprising a partition plate provided between the gas nozzles and having a laser beam passage hole through which the laser beam passes.

8. The vacuum laser processing device according to any one of claims 1, 6, and 7, wherein the gas nozzle is provided in a mode in which cross jet gas is injected orthogonally to the optical axis of the laser beam.

9. The vacuum laser processing device according to any one of claims 1 to 8, wherein the gas nozzle has a width larger than a diameter of the laser beam at an injection position to the laser beam.

10. The vacuum laser processing device according to any one of claims 1 to 9, comprising a removal chamber provided in the construction chamber so as to surround the outlet of the laser beam of the irradiation chamber, the removal chamber having a laser beam passage hole through which the laser beam passes to the construction chamber, the removal chamber including the gas nozzle of the gas supply unit positioned.

11. The vacuum laser processing device according to claim 10, wherein a relation of P2 × 10 ≤ P1 is satisfied, where P1 is an atmospheric pressure in an interior of the removal chamber, and P2 is an atmospheric pressure in an interior of the construction chamber.

12. The vacuum laser processing device according to any one of claims 1 to 11, comprising a gas discharge unit configured to discharge cross jet gas injected from the gas nozzle to an exterior of the construction chamber.

13. The vacuum laser processing device according to claim 12, wherein the gas discharge unit is connected to the vacuum device unit through a regulating valve.

14. The vacuum laser processing device according to any one of claims 1 to 13, wherein the vacuum device unit includes a vacuum exhaust pipe connected to the construction chamber, a vacuum pump provided in the vacuum exhaust pipe, and a collection section positioned upstream of the vacuum pump in the vacuum exhaust pipe.

15. The vacuum laser processing device according to any one of claims 1 to 14, comprising an auxiliary gas supply unit configured to inject, into the irradiation chamber, auxiliary gas having a pressure higher than that of cross jet gas of the gas supply unit.

16. The vacuum laser processing device according to any one of claims 1 to 15, comprising a housing container housing the laser beam irradiation unit, the housing container being positioned in an interior of the construction chamber.

17. The vacuum laser processing device according to any one of claims 1 to 16, further comprising an auxiliary construction chamber provided to be detachable from the construction chamber, the auxiliary construction chamber being communicated with the construction chamber and in which a part of the object to be processed is positioned.

18. The vacuum laser processing device according to claim 17, wherein the auxiliary construction chamber has a door configured to open and close to allow the object to be processed to be put in and taken out.

19. The vacuum laser processing device according to claim 17 or 18, wherein the auxiliary construction chamber has a support mechanism configured to support the object to be processed.
